Europäisches Patentamt

European Patent Office

Office européen des brevets

(11) Numéro de publication : **0 344 052 B1**

(19)

# FASCICULE DE BREVET EUROPEEN

(12)

(45) Date de publication du fascicule du brevet :
22.07.92 Bulletin 92/30

(51) Int. Cl.⁵ : **G06F 15/76, G06F 13/16, G06F 5/06**

(21) Numéro de dépôt : **89401392.9**

(22) Date de dépôt : **22.05.89**

(54) **Mémoire modulaire.**

(30) Priorité : **25.05.88 FR 8806910**

(43) Date de publication de la demande :
**29.11.89 Bulletin 89/48**

(45) Mention de la délivrance du brevet :
**22.07.92 Bulletin 92/30**

(84) Etats contractants désignés :
**DE FR GB IT NL**

(56) Documents cités :
**EP-A- 0 014 926
FR-A- 2 536 884
US-A- 3 566 363
IEEE, PROCEEDINGS OF THE ANNUAL SYMPOSIUM ON COMPUTER ARCHITECTURE,
Long Beach, 23-25 mars 1977, symp. 4, pages
90-94, US;S.R. AHUJA et al.: "A modular
memory scheme for array processing"**

(73) Titulaire : **BULL S.A.
121, Avenue de Malakoff
F-75116 Paris (FR)**

(72) Inventeur : **Keryvel, Georges
25, avenue de la Grande Armée
F-75016 Paris (FR)**
Inventeur : **Thomas, Jean-Louis
25, avenue de la Grande Armée
F-75016 Paris (FR)**
Inventeur : **Timsit, Claude
25, avenue de la Grande Armée
F-75016 Paris (FR)**

(74) Mandataire : **Fournier, Michel Robert Marie et
al
Bull S.A. Industrial Property Department P.C. :
HQ 8M006 BP 193.16 121 avenue de Malakoff
F-75764 Paris Cédex 16 (FR)**

## Description

L'invention se situe dans le domaine des mémoires, appelées couramment mémoires centrales, utilisées dans les unités centrales des ordinateurs.

La mémoire selon l'invention est particulièrement destinée à être utilisée dans des systèmes à hautes performances utilisant par exemple des processeurs vectoriels.

Dans ce genre d'application, on utilise habituellement des mémoires à semi-conducteurs telles que des mémoires statiques.

Une unité centrale comprend généralement un ou plusieurs processeurs reliés à une mémoire centrale par l'intermédiaire d'un contrôleur mémoire. Les processeurs accèdent normalement aux données contenues dans la mémoire en envoyant au contrôleur mémoire des demandes sous la forme de signaux de commande (commande de lecture ou commande d'écriture), de signaux d'adresse et de signaux de données, dans le cas d'une écriture. Les signaux de commande sont généralement précédés ou accompagnés d'un signal de requête permettant d'avertir le contrôleur mémoire qu'une demande est envoyée.

En réponse à une telle demande, le contrôleur mémoire effectue alors une série d'opérations consistant notamment à charger dans un registre d'entrée les paramètres de la demande. Généralement le contrôleur envoie également des signaux d'acquittement pour informer le processeur que la demande est acceptée puis que la réponse est disponible dans le registre de sortie du contrôleur.

La réponse est constituée des données contenues à l'adresse fournie par le processeur dans le cas d'une lecture. La réponse peut comprendre également un compte rendu d'erreurs pour informer le processeur si l'opération demandée a été effectuée correctement.

Les paramètres fondamentaux pour évaluer les performances d'une mémoire sont le temps d'accès et le temps de cycle. Le temps d'accès est défini comme étant l'intervalle de temps qui sépare l'envoi d'une requête par le processeur et l'apparition d'un signal d'acquittement indiquant que la demande est prise en compte par la mémoire indiquant ainsi qu'une nouvelle demande peut être adressée à la mémoire par le processeur. Le temps de cycle définit l'intervalle de temps qui sépare le moment où une demande est reçue par la mémoire et l'instant où la réponse est disponible dans le registre de sortie de la mémoire.

Selon l'évolution actuelle dans la conception des ordinateurs, il est nécessaire de disposer de mémoires ayant des capacités de plus en plus importantes. D'autre part, on cherche à réaliser des processeurs ayant des performances de plus en plus élevées, c'est-à-dire permettant un très grand nombre d'accès mémoire par seconde. Pour augmenter les performances du processeur, on utilise diverses techniques telles que l'utilisation de systèmes multiprocesseurs et/ou l'architecture dite "pipe line".

Cependant, pour bien utiliser les perfectionnements réalisés dans les processeurs, il faut aussi que les mémoires associées aient des performances compatibles. Il faut donc réaliser des mémoires présentant un temps d'accès et un temps de cycle le plus court possible. Mais ces conditions sont difficilement compatibles avec l'augmentation de la capacité de la mémoire car, avec les technologies actuelles, le temps d'accès d'une mémoire augmente avec sa capacité.

Pour résoudre ce problème, une solution classique consiste à utiliser une mémoire composée de plusieurs modules, chaque module ayant par conséquent un temps d'accès inférieur à celui qu'aurait une mémoire non modulaire de même capacité. D'autre part, on utilise la technique de l'entrelacement selon laquelle les demandes successives envoyées par les processeurs s'adressent successivement à des modules différents de la mémoire.

Cependant cette solution pose un autre problème qui est celui des liaisons entre les processeurs et les divers modules mémoire. Selon une première méthode connue, on utilise des chemins d'accès différents pour chacun des modules. Un processeur est alors relié aux modules par l'intermédiaire d'un circuit d'interconnexion ayant autant de liaison que la mémoire a de modules. Dans le cas d'un système multiprocesseur, tel qu'un processeur vectoriel, le circuit d'interconnexion est fonctionnellement équivalent à un système "crossbar". Cette méthode présente l'avantage d'autoriser des accès simultanés des processeurs vers plusieurs modules mémoire. Cependant cette solution est limitée aux cas où le nombre de modules et de processeurs est relativement limité. En effet, au delà d'une dizaine de module, le dispositif d'interconnexion devient difficile à réaliser et à contrôler. De plus, elle entraîne une augmentation du temps de cycle du système.

Selon une autre solution connue, cet inconvénient peut être évité en utilisant une liaison de type bus entre les processeurs et les différents modules. Dans ce cas, on prévoit un contrôleur mémoire par module, chaque contrôleur étant muni d'un registre d'entrée et d'un décodeur d'adresse. Habituellement on utilise deux nus distincts pour véhiculer les demandes et les réponses de sorte que, en mode entrelacé, le temps d'accès global de la mémoire est égal au temps d'accès d'un module divisé par le nombre de modules.

Cependant cette dernière solution, présente l'inconvénient suivant. La réponse à une demande adressée à un module quelconque de la mémoire est disponible dans le registre de sortie du module au bout d'un temps correspondant au temps de propagation de la demande du processeur au module auquel s'ajoute le temps de cycle du module. Or le temps de propagation et le temps de cycle peuvent être variables d'un module à l'autre. Ces différences deviennent particulièrement sensibles lorsque le temps de cycle du processeur diminue et lorsque le nombre de modules augmente car il devient alors possible que les réponses à deux demandes successives adressées à deux modules différents se présentent simultanément sur le bus de sortie.

Pour résoudre ce problème, une solution consiste à synchroniser les échanges entre les modules mémoires et les bus. Ainsi, le document IEEE, PROCEEDINGS OF THE ANNUAL SYMPOSIUM ON COMPUTER ARCHITECTURE ; Long Beach, 23-25 mars 1977, symp. 4, pages 90-94, US ; S.R. AHUJA et al. : "A modular memory scheme for array processing" décrit une mémoire parallèle destinée aux unités de traitement du type pipe-line. La mémoire est organisée en modules fonctionnant en parallèle, chaque module communiquant avec le système de traitement par l'intermédiaire d'un bus commun d'entrée et d'un bus commun de sortie. Chaque module est relié aux bus par l'intermédiaire de plusieurs registres tampons associés respectivement à une variable. Les échanges de données entre ces registres et les bus sont commandés par un ensemble de boucles en nombre égal au nombre de buffers. Chaque boucle est associée à une variable et est réalisée au moyen d'un registre à décalage d'un bit rebouclé dont un seul étage est à 1 logique. Un registre est autorisé à échanger des données avec le bus en fonction de la position du bit de contrôle associé. Cependant, cette solution présente les inconvénients qu'entraîne l'utilisation de bus. En effet, les bus sont par définition partagés entre les unités qui y sont reliés, ce qui implique une limitation du débit et interdit le parallélisme sauf si on prévoit plusieurs bus indépendants. Cependant, même dans ce cas, le parallélisme est limité car on ne peut pas augmenter indéfiniment la largeur du bus pour des raisons technologiques.

L'invention a pour but de remédier aux inconvénients précédents en assurant que les réponses issues des différents modules seront reçues successivement par le processeur dans un ordre identique à l'ordre d'envoi des demandes correspondantes et acceptées par les modules, tout en évitant une limitation du parallélisme.

Plus précisément l'invention a pour objet une mémoire à plusieurs modules destinée à recevoir des demandes d'au moins un processeur, lesdites demandes ayant la forme de signaux de commandes, d'adressages et éventuellement de données, chaque module comportant des moyens pour décoder lesdites demandes apparaissant sur son entrée et des moyens pour fournir des signaux de réponse auxdites demandes, ladite mémoire étant caractérisée en ce que lesdites demandes sont transmises à l'entrée de chacun desdits modules par l'intermédiaire d'un registre à décalage d'entrée, en ce que les réponses issues dudit module sont transmises à l'entrée dudit processeur par l'intermédiaire d'un registre à décalage de sortie, en ce que le nombre d'étages dudit registre à décalage d'entrée est différent pour chacun des modules associés et en ce que le nombre total d'étages appartenant aux registres à décalage d'entrée et de sortie associés à l'un desdits modules est constant et indépendant du module considéré.

L'invention présente en outre l'avantage d'éviter l'utilisation d'un système centralisé de synchronisation complexe et de permettre une totale modularité de la mémoire.

De plus, l'invention permet une réalisation particulièrement simple et selon laquelle la mémoire comporte un seul registre à décalage d'entrée et un seul registre à décalage de sortie communs à tous les modules, la sortie dudit processeur étant reliée à l'entrée du premier étage dudit registre à décalage d'entrée, l'entrée dudit processeur étant reliée à la sortie du dernier étage dudit registre à décalage de sortie et en ce que la sortie de chaque étage de registre à décalage d'entrée est reliée à l'entrée d'un desdits modules, la sortie dudit module étant reliée à la sortie de l'étage de même rang du registre à décalage de sortie.

La solution précédente permet bien d'obtenir les performances recherchées en mode entrelacé. Cependant la mémoire ne doit pas être limitée à ce mode de fonctionnement et il faut donc prévoir un mécanisme interdisant qu'une demande adresse un module qui vient d'être adressé par une demande précédente moins d'un certain temps minimum auparavent, ce temps correspondant au temps d'accès du module. Ce problème existe également dans le système avec bus évoqué précédemment. Pour résoudre cette difficulté, on prévoit habituellement un système à fenêtres géré par le processeur.

Il est également possible de prévoir un circuit d'inhibition temporisé extérieur au processeur interdisant l'envoi d'une demande adressée à un module et succédant à une première demande adressée au même module après un intervalle de temps inférieur à une durée déterminée en fonction du temps d'accès global caractérisant chaque module.

Bien que ces solutions résolvent le problème de collision de demandes successives trop rapprochées, il en résulte une complication dans la réalisation soit du processeur, soit du circuit d'inhibition. Cette solution présente en outre l'inconvénient d'augmenter le temps de cycle global du système.

Aussi, selon une variante de l'invention le problème précédent est résolu selon le principe suivant : à chaque demande issue du processeur, on associe un indicateur véhiculé avec la demande et signalant que la demande est valide. Lorsque la demande est acceptée par l'un des modules de la mémoire, cet indicateur prend une autre valeur signifiant que la demande est acceptée par le module. Ainsi, en fonction de la valeur de cet indicateur, il sera possible de déterminer si une nouvelle demande peut être envoyée par le processeur.

Aussi l'invention a également pour objet une mémoire caractérisée en ce que chaque module est associé à un circuit d'acquittement des demandes pour associer à chaque demande un indicateur de demande véhiculé par ledit registre à décalage d'entrée, ledit circuit d'acquittement des demandes forçant ledit indicateur de demande à une première valeur déterminée lorsqu'un signal d'acquittement délivré par ledit module indique que ledit module accepte la demande présente à son entrée et en ce que ledit registre à décalage d'entrée comporte un étage supplémentaire placé en aval du dernier étage dudit registre à décalage, la sortie dudit étage supplémentaire étant reliée à un circuit de contrôle des demandes associé audit processeur, ledit circuit de contrôle des demandes comportant un dispositif de sélection des demandes autorisant le transfert à l'entrée dudit registre à décalage d'entrée soit d'une nouvelle demande si la valeur dudit indicateur contenue dans ledit étage supplémentaire est égale à ladite première valeur déterminée soit de la demande contenue dans ledit étage supplémentaire dans le cas contraire, l'indicateur de demande associé à toute nouvelle demande prenant une seconde valeur déterminée.

Un problème analogue au précédent se pose aussi dans le cas où l'on utilise un registre à décalage de sortie unique pour véhiculer les réponses des divers modules. Il peut en effet se produire des situations où une réponse contenue dans l'étage du registre à décalage placé en amont d'un des modules entre en conflit avec la réponse disponible en sortie de ce module.

Une solution pourrait consister à prévoir au niveau du processeur un mécanisme de contrôle des adresses pour prévenir dans tous les cas ce genre de situation. Mais cette solution complique la tâche du processeur, ce qui dégrade ses performances.

Aussi selon une autre variante de l'invention, on résoud ce problème d'une façon analogue à la solution au problème précédent. Dans ce but, l'invention concerne également une mémoire en outre caractérisée en ce que ledit registre à décalage de sortie comporte un étage supplémentaire placé en aval du dernier étage et en amont du premier étage dudit registre à décalage de sortie, en ce que la sortie dudit étage supplémentaire est reliée à l'entrée dudit processeur et à l'entrée d'un circuit d'acquittement des réponses associé audit processeur ledit circuit d'acquittement des réponses comprenant des moyens pour associer à chaque réponse transférée au premier étage dudit registres à décalage de sortie un indicateur de réponse véhiculé par ledit registre à décalage de sortie, ledit indicateur de réponse prenant une première valeur déterminée si ladite réponse est acceptée par le processeur, et en ce que chaque module est associé à un circuit de contrôle des réponses comprenant un dispositif de sélection des réponses autorisant le transfert sur l'étage placé en aval dudit module

– soit d'une réponse disponible à la sortie dudit module si la valeur dudit indicateur de réponse contenue dans l'étage situé en amont dudit module est égale à ladite première valeur déterminée,

– soit de la réponse contenue dans ledit étage amont dans le cas contraire, et en ce que ledit circuit de contrôle des réponses comprend des moyens pour forcer ledit indicateur de réponse à une seconde valeur déterminée si une réponse issue dudit module est transférée sur ledit étage aval.

D'autres caractéristiques et détails de réalisation de l'invention seront exposées dans la suite de la description en relation avec les figures où :

– La figure 1 montre un schéma de réalisation de la présente invention.

– La figure 2 montre une variante de réalisation de la présente invention.

– Les figures 3 et 4 montrent des détails de réalisation de la variante, selon la figure 2.

– La figure 5 montre une deuxième variante de réalisation de l'invention.

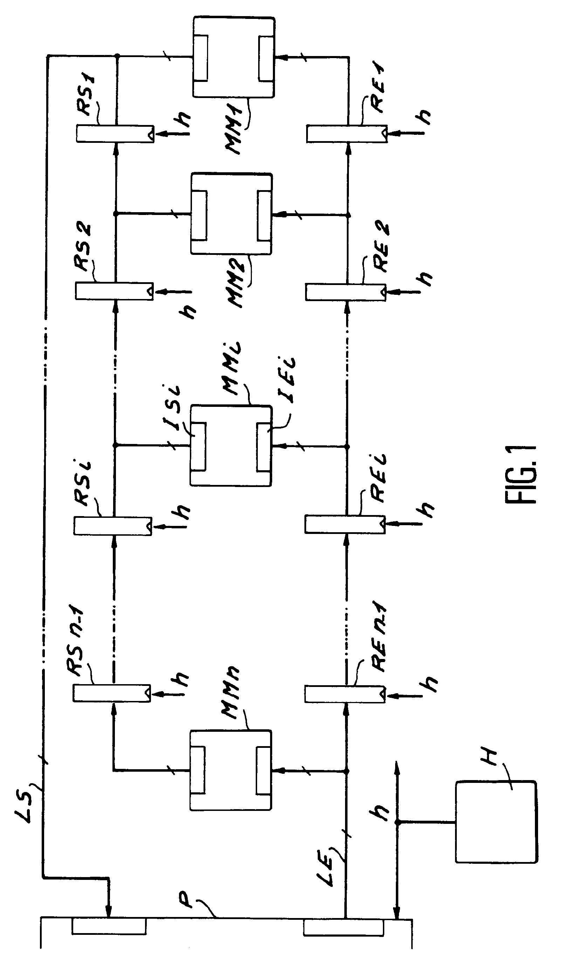

La figure 1 représente une mémoire conformément à l'invention selon un mode de réalisation simplifié.

La mémoire comprend plusieurs modules mémoire $MM_1$, $MM_2$,...,$MM_i$,...,$MM_n$. La mémoire coopère avec un dispositif utilisateur tel qu'un processeur P, et communique avec lui par ses interfaces d'entrée-sortie.

Chaque module $MM_i$ comporte une interface d'entrée $IE_i$ pour recevoir des demandes de l'extérieur, une demande correspondant à un ordre de lecture ou d'écriture dans le module considéré. En général une demande est constituée d'un code de fonction servant à définir l'opération à effectuer par la mémoire, d'une information d'adresse et, dans le cas d'une écriture, des données à écrire. La demande peut également comporter une étiquette d'origine servant à identifier la demande.

L'interface d'entrée comprend un registre d'entrée servant à mémoriser les demandes reçues ainsi qu'un décodeur d'adresse servant notamment à sélectionner le module considéré, par exemple en réponse au poids fort de l'adresse reçue.

L'interface de sortie $IS_i$ est reliée aux lignes de sortie de la mémoire. L'interface $IS_i$ comprend un registre de sortie servant à emmagasiner les réponses avant qu'elles soient prises en compte par le processeur.

Une réponse est constituée des données lues, dans le cas d'une lecture accompagnée généralement d'un compte rendu d'erreurs servant à informer le processeur si l'opération demandée a été correctement ou non effectuée. Une réponse peut également comprendre une étiquette de destination servant à identifier la réponse. Généralement, les étiquettes d'origine d'une demande et celle de destination pour la réponse correspondante sont identiques.

Dans le cas d'un processeur composé de plusieurs processeurs élémentaires, l'étiquette peut servir à identifier le processeur élémentaire qui a émis la demande.

Le processeur fournit ses demandes sur des lignes d'entrée LE par l'intermédiaire d'un circuit d'interface de sortie comportant un ou plusieurs registres. Une interface d'entrée du processeur, comportant également un ou plusieurs registres reçoit les réponses de la mémoire par l'intermédiaire des lignes de sortie LS.

Conformément à l'invention, les demandes issues du processeur accèdent aux divers modules de la mémoire par l'intermédiaire d'un registre à décalage d'entrée constitué des étages $RE_1, RE_2,...RE_i,...RE_{n-1}$. Les lignes d'entrée LE sont reliées à l'entrée du premier étage $RE_{n-1}$ du registre à décalage d'entrée et la sortie de chaque étage $RE_i$ est reliée à l'entrée d'un module correspondant $MM_i$ ainsi qu'à l'entrée de l'étage suivant $RE_{i-1}$. Le premier module $MM_n$ peut être relié directement aux lignes d'entrée LE.

La mémoire comprend également un registre à décalage de sortie constitué des étages $RS_1, RS_2,...RS_i,...RS_{n-1}$. Chaque étage $RS_i$ du registre à décalage de sortie a sa sortie reliée à la sortie d'un module correspondant $MM_i$ et à l'entrée de l'étage suivant $RS_{i-1}$.

Chaque étage des registres à décalage d'entrée et de sortie reçoit sur son entrée d'horloge un signal d'horloge h engendré par un circuit d'horloge H. Ce signal d'horloge h est également appliqué au processeur P, pour sa synchronisation.

Le dispositif de la figure 1 fonctionne de la façon suivante : lors d'une opération de lecture ou d'écriture commandée par le processeur P, ce dernier délivre sur la ligne d'entrée LE une succession de demandes $D_1, D_2...D_x$ au rythme du signal d'horloge h. Chaque fois que cela est possible, le processeur accède à la mémoire en mode entrelacé et, dans ce cas, la première demande $D_1$ s'adresse au module $MM_1$, la seconde demande $D_2$ s'adresse au module $MM_2$, etc... Après l'envoi de n demandes, c'est-à-dire après n décalages, les demandes $D_1, D_2,...D_{n-1}$, sont disponibles en sortie respectivement des étages $RE_1, RE_2,...RE_{n-1}$, la demande $D_n$ étant disponible à la sortie du registre de sortie du processeur P. Ainsi les modules $MM_i$ reçoivent simultanément une demande qui leur est destinée. Après un temps de cycle des modules, les réponses sont disponibles en sortie des modules $MM_i$ et pourront être introduites dans l'étage

aval correspondant $RS_{i-1}$ du registre à décalage de sortie. A chaque décalage provoqué par le signal d'horloge h, le processeur P reçoit une réponse dont l'ordre d'arrivée correspond à l'ordre d'envoi de la demande correspondante.

On constate donc que le temps total d'accès à des données est totalement indépendant du module dans lequel se trouvent ces données.

La mémoire doit être aussi en mesure de fonctionner dans un mode non entrelacé, c'est-à-dire selon lequel des demandes successives sont adressées à des modules quelconques. Compte tenu du fait que le temps de cycle des registres à décalage est prévu pour être très inférieur au temps d'accès des modules, il faut éviter que deux demandes rapprochées s'adressent au même module. De même, il faut éviter qu'une réponse issue d'un module entre en conflit avec une réponse placée dans l'étage situé en amont de ce module. Ces situations peuvent être évitées grâce à un mécanisme de gestion des adresses commandé par le processeur. Cependant, cette solution présente l'inconvénient d'alourdir la tâche du processeur et risque de réduire ses performances.

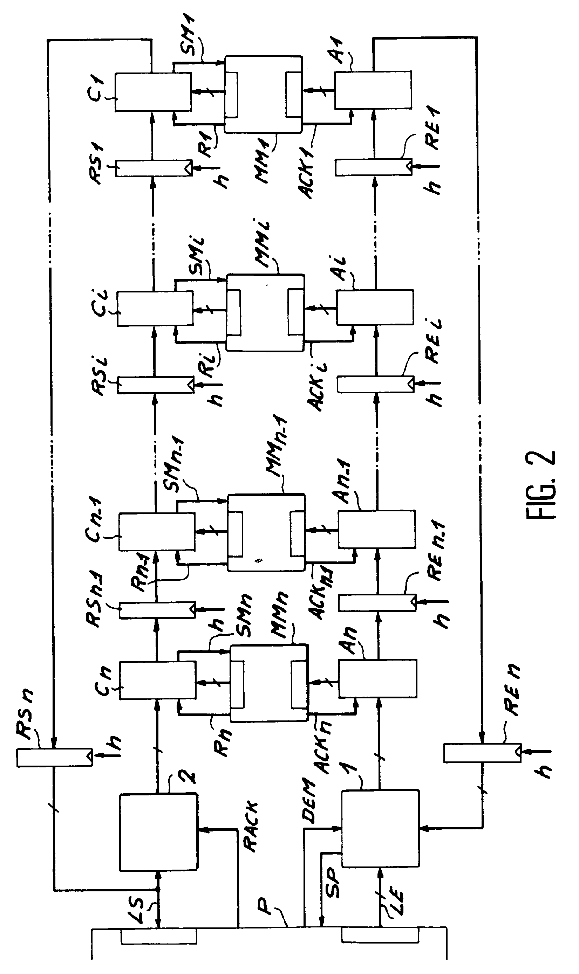

La variante de réalisation représentée à la figure 2 permet de résoudre ce problème sans présenter les inconvénients précités. Sur la figure 2, on retrouve avec les mêmes signes de références les modules mémoire, les registres à décalage d'entrée et de sortie et le processeur. Par rapport à la figure 1, la figure 2 présente les différences suivantes. Tout d'abord le registre à décalage d'entrée est complété par un étage supplémentaire $RE_n$ placé en aval du dernier étage $RE_1$ du registre à décalage d'entrée. La sortie de cet étage supplémentaire $RE_n$ est reliée à un circuit de contrôle des demandes 1.

De plus, chaque module mémoire $MM_i$ est associé à un circuit d'acquittement $A_i$ dont l'entrée est reliée à 'étage amont $RE_i$ du registre à décalage d'entrée et dont une sortie est reliée à l'étage aval $RE_{i-1}$. Une autre sortie du circuit d'acquittement $A_i$ est reliée à l'entrée du module associé $MM_i$. Le circuit d'acquittement $A_i$ reçoit également un signal d'acquittement $ACK_i$ issu du module mémoire associé.

La sortie du circuit de contrôle des demandes 1 est directement reliée à l'entrée du circuit d'acquittement $A_n$ associée au module $MM_n$. Le circuit de contrôle des demandes 1 est relié en entrée à l'interface de sortie du processeur P par les lignes d'entrée LE. Ce circuit 1 reçoit en outre du processeur P un signal DEM indiquant que le processeur est prêt pour envoyer une nouvelle demande. Le circuit 1 fournit enfin au processeur P un signal SP qui sera défini ultérieurement.

Bien que cela ne soit pas visible sur la figure 2, les étages $RE_i$ du registre à décalage d'entrée comportent, en plus des bascules affectées aux signaux de demande, une bascule supplémentaire et les liaisons entre les étages comportent une ligne supplémentaire associée à cette bascule. Le but de cette bascule et de cette ligne supplémentaire est de pouvoir véhiculer un indicateur binaire B dont la valeur logique indique si la demande associée a été prise en compte ou non par l'un des modules de la mémoire.

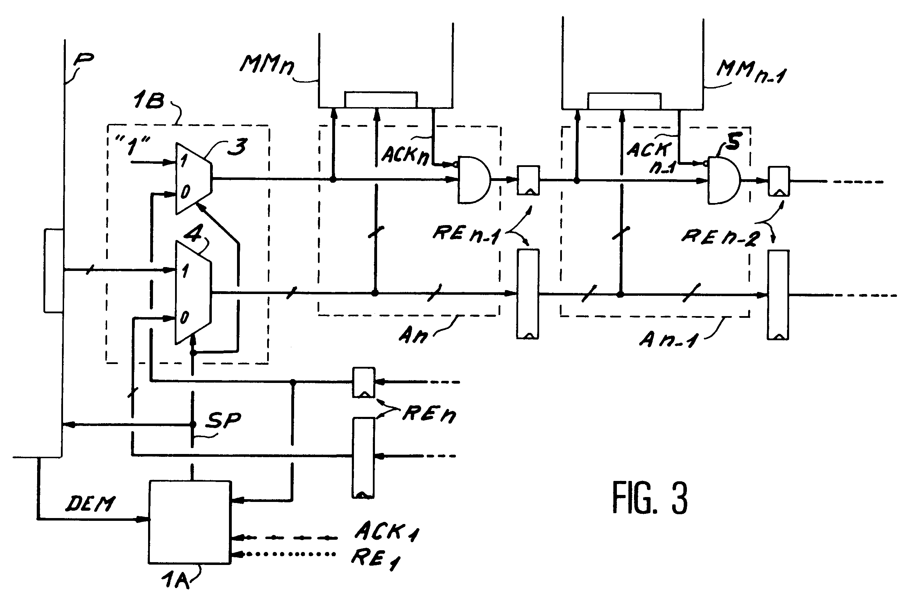

Le fonctionnement détaillé des circuits d'acquittement et du circuit de contrôle de demandes seront exposés plus en détail en référence à la figure 3. Néanmoins, on peut déjà indiquer dans les grandes lignes le fonctionnement du registre à décalage d'entrée selon la variante de la figure 2.

En supposant qu'une demande peut être envoyée à la mémoire, le circuit de contrôle 1 délivre à sa sortie la demande proprement dite accompagnée de l'indicateur B dont la valeur logique indique la présence d'une demande valide, c'est-à-dire non encore acceptée par la mémoire. Cette demande et l'indicateur associé progressent dans le registre à décalage tant qu'ils n'ont pas atteint le module destinataire identifié par l'adresse. Lorsque la demande arrive dans l'étage placé en amont du module destinataire, l'adresse contenue dans la demande est reconnue par ce module et si ce module est disponible, il transmet un signal d'acquittement $ACK_i$ au circuit d'acquittement $A_i$. Au cycle d'horloge suivant, la demande est transmise à l'étage aval mais le circuit d'acquittement force l'indicateur B à une autre valeur logique indiquant que la demande a été acceptée par le module $MM_i$. Si le module n'est pas disponible, celui-ci envoie un signal d'acquittement $ACK_i$ ayant la valeur complémentaire. Au temps d'horloge suivant la demande est aussi transmise à l'étage aval mais l'indicateur B conserve sa valeur initiale. La demande et son indicateur progressent ensuite dans le registre à décalage d'entrée et arriveront dans l'étage supplémentaire $RE_n$.

Lorsque le processeur est prêt à envoyer une demande, il positionne le signal DEM à une première valeur déterminée. Ce signal est reçu par le circuit de contrôle des demandes 1 qui comprend des moyens pour tester la valeur logique de l'indicateur B contenu dans l'étage $RE_n$. Si la valeur de l'indicateur B indique une demande valide, la demande et l'indicateur contenus dans le registre $RE_n$ sont transmis à l'entrée du premier circuit d'acquittement $A_n$ et la demande du processeur n'est pas autorisée à être introduite dans le registre à décalage. Si l'indicateur contenu dans le registre $RE_n$ indique une demande non valide, la demande du processeur est introduite dans le registre à décalage par l'intermédiaire de la ligne de sortie du circuit de contrôle des demandes 1. Le processeur est informé si sa demande est acceptée ou non par le signal SP engendré par le circuit de contrôle des demandes 1.

Nous voyons que cette solution résoud le problème posé précédemment car dans le cas où deux demandes trop rapprochées seraient présentées au même module mémoire, la deuxième demande qui ne peut pas être prise en compte par ce module continue à progresser dans le registre à décalage et sera réintroduite à l'entrée de ce registre après n décalages. Cette demande se présentera à nouveau à l'entrée du module destinataire et une nouvelle tentative de prise en compte sera à nouveau effectuée.

Par rapport à la figure 1, la réalisation selon la figure 2 présente aussi des modifications portant sur le registre à décalage de sortie.

Chaque module $MM_i$ est associé à un circuit de contrôle des réponses $C_i$ relié à la sortie du module correspondant. Chaque circuit de contrôle des réponses a une autre entrée reliée à la sortie de l'étage $RS_i$ situé en amont du module correspondant et a sa sortie reliée à l'entrée de l'étage $RS_{i-1}$ situé en aval du module correspondant. Chaque circuit de contrôle des réponses $C_i$ reçoit également un signal $R_i$ issu du module associé et dont la valeur logique est représentative d'une réponse disponible en sortie du module.

Le circuit de contrôle des réponses $C_1$ associé au dernier module $MM_1$ a sa sortie reliée à un étage supplémentaire $RS_n$ du registre à décalage de sortie. Le circuit de contrôle des réponses $C_n$ associé au premier module $MM_n$ a une entrée reliée à la sortie d'un circuit d'acquittement des réponses 2 dont l'entrée est reliée à la fois à la sortie de l'étage supplémentaire $RS_n$ et à l'entrée du processeur. Le circuit d'acquittement des réponses 2 reçoit également du processeur P un signal RACK dont la valeur logique est indicative d'une réponse acceptée par le processeur.

Chaque circuit de contrôle des réponses $C_i$ fournit au module associé un signal $SM_i$ qui sera défini ultérieurement.

Chaque étage $RS_i$ du registre à décalage de sortie comprend une bascule supplémentaire (non représentée) et les liaisons reliant les étages entre eux comportent une ligne supplémentaire. La bascule supplémentaire et la ligne supplémentaire permettent de véhiculer un indicateur de réponse $B_r$ ayant une première valeur logique lorsque la réponse associée a déjà été acceptée par le processeur et une seconde valeur logique lorsque cette réponse n'a pas été acceptée.

Le registre à décalage de sortie selon la figure 2 fonctionne de la façon suivante. Lorsqu'une réponse valide, c'est-à-dire non encore acceptée par le processeur est présente dans l'étage supplémentaire $RS_n$ et que cette réponse est acceptée par le processeur, ce dernier envoie au circuit d'acquittement des réponses 2 un signal RACK ayant une première valeur logique indiquant que la réponse est acceptée. Le circuit d'acquittement des réponses 2 transmet alors la réponse contenue dans l'étage $RS_n$ vers le circuit de contrôle des réponses $C_n$ du premier module $MM_n$. Simultanément le circuit d'acquittement des réponses 2 force l'indicateur de réponses $B_r$ associé à la première valeur logique.

Si la réponse n'est pas acceptée par le processeur, celui-ci envoie un signal RACK ayant une deuxième valeur logique et en réponse à ce signal, le circuit d'acquittement des réponses 2 transmet la réponse contenue dans l'étage $RS_n$ et l'indicateur $B_r$ associé directement à l'entrée du circuit de contrôle des réponses $C_n$ sans modifications.

Lorsqu'un module $MM_i$ a une réponse prête, ce dernier envoie au circuit de contrôle des réponses associé $C_i$ un signal $R_i$ ayant une première valeur logique. Si l'indicateur $B_r$ contenu dans l'étage situé en amont du module a la première valeur logique déterminée, le circuit de contrôle de réponses $C_i$ met en communication la sortie du module associé avec l'entrée de l'étage $RS_{i-1}$ situé en aval de ce module. Simultanément le circuit de contrôle des réponses $C_i$ force l'indicateur de réponse $B_r$ associé à la deuxième valeur logique et le transmet à la bascule correspondante de l'étage aval $C_{i-1}$.

Si l'indicateur contenu dans l'étage situé en amont du module a une valeur égale à la deuxième valeur logique, la réponse disponible en sortie du module est bloquée et le contenu de l'étage amont $RS_i$ est transmis directement dans l'étage aval $RS_{i-1}$.

Lorsqu'une réponse disponible dans un module $MM_i$ a été introduite dans le registre à décalage de sortie cela est signifié au module $MM_i$ par le signal $SM_i$.

Le registre à décalage de sortie selon la figure 2 permet donc d'éviter la collision de deux réponses, l'une issue d'un module mémoire, l'autre issue de l'étage situé en amont de ce module.

La figure 3 montre avec plus de détails le circuit de contrôle des demandes 1 et les circuits d'acquittement $A_i$ utilisés dans la figure 2.

Le circuit de contrôle des demandes 1 est constitué d'un circuit de sélection 1B et d'un circuit de commandes 1A. Le circuit de sélection 1B comprend un premier multiplexeur 3 à deux entrées, une première entrée recevant un signal logique fixe, l'autre entrée étant reliée à la bascule de l'étage $RE_n$ contenant l'indicateur B. Un deuxième multiplexeur 4 à deux entrées a sa première entrée reliée à la sortie du processeur P et sa seconde entrée reliée aux sorties des autres bascules de l'étage $RE_n$. Les deux multiplexeurs 3 et 4 sont commandés par un signal SP issu du circuit de commandes 1A. Le circuit de commandes 1A reçoit l'indicateur contenu dans l'étage $RE_n$ et le signal DEM.

Dans l'exemple de réalisation représenté, nous avons supposé que l'indicateur est un élément binaire qui lorsqu'il prend la valeur 1 logique indique que la demande est valide donc non encore acceptée par la mémoire. Lorsque l'indicateur prend la valeur 0 logique, la demande associée a été acceptée par la mémoire. Par ailleurs, nous avons supposé que lorsque le signal SP prend la valeur 1 logique, les multiplexeurs 3 et 4 mettent en communication leur entrée supérieure avec leur sortie. Enfin, nous supposerons que le signal DEM prend la valeur 1 logique lorsqu'une demande est présente à la sortie du processeur.

Le circuit de contrôle des demandes fonctionne de la façon suivante. Le circuit de contrôle 1A délivre le signal SP avec la valeur 1 logique lorsque l'indicateur B a la valeur 0 logique et lorque le signal DEM a la valeur 1 logique. Le signal SP prend la valeur 0 logique dans les cas contraires. Ainsi, lorque SP est égal à 1, la demande présente en sortie du processeur est transmise à la sortie du multiplexeur 4 et simultanément l'indicateur B prend la valeur 1 logique en sortie du multiplexeur 3. Si SP est égal à 0, le contenu de l'étage REn est alors présent aux sorties des multiplexeurs 3 et 4.

Le signal SP est également transmis au processeur P pour informer si sa demande a été introduite ou non dans le registre à décalage d'entrée.

La réalisation du circuit de commandes 1A ne sera pas décrite plus en détails car elle ne présente aucune difficulté pour l'homme du métier.

Les circuits d'acquittement $A_n$ et $A_{n-1}$ associés aux deux premiers modules $MM_n$ et $MM_{n-1}$ sont également représentés sur la figure 3. Le circuit d'acquittement $A_{n-1}$ associé au second module $MM_{n-1}$ est simplement constitué d'une porte logique 5 à deux entrées dont la première entrée reçoit le signal d'acquittement $ACK_{n-1}$ du module associé et dont la seconde entrée est reliée à la sortie de la bascule de l'étage amont affectée à l'indicateur. La sortie de la porte 5 est reliée à l'entrée de la bascule de l'étage aval affectée à l'indicateur.

En fonctionnement, lorqu'une demande est adressée au module $MM_{n-1}$ et que cette demande est présente dans le registre $RE_{n-1}$, si la demande est valide c'est-à-dire si l'indicateur B contenu dans ce dernier registre a la valeur 1 logique et si la mémoire est disponible, la mémoire prend en compte la demande et délivre un signal d'acquittement $ACK_{n-1}$ ayant la valeur 1 logique. La porte logique 5 délivre alors en sortie la valeur 0 logique.

Si une demande non valide, c'est-à-dire avec B égal 0, est contenue dans le registre $RE_{n-1}$, cette demande est mise directement en communication avec l'étage aval $RE_{n-1}$ sans modification de l'indicateur B.

Le circuit d'acquittement associé au premier module $MM_n$ est identique, à la différence près que ses entrées ne sont pas reliées à l'étage amont du registre à décalage d'entrée mais aux sorties du circuit de sélection 1B.

Les autres étages du registre à décalage d'entrée sont identiques au premier et n'ont donc pas été représentés sur la figure 3.

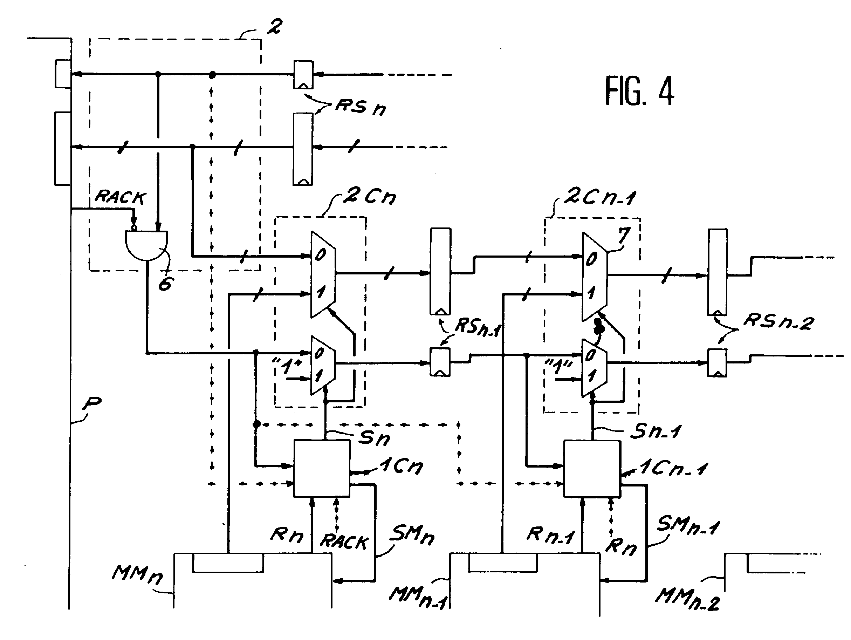

La figure 4 représente les modes de réalisation du circuit d'acquittement des réponses 2 et des circuits de contrôle des réponses $C_i$.

Le circuit d'acquittement des réponses 2 comprend essentiellement une porte logique 6 recevant sur une première entrée l'indicateur $B_r$ contenu dans l'étage $RS_n$ du registre à décalage de sortie. La porte 6 reçoit sur sa seconde entrée le signal RACK issu du processeur P. La sortie de la porte 6 est reliée au circuit de contrôle des réponses $C_n$ du module $MM_n$.

Conformément à la convention exposée précédemment, lorsque l'indicateur $B_r$ a la valeur 1 logique, cela signifie que la réponse associée est valide c'est-à-dire qu'elle n'a pas été acceptée par le processeur.

On suppose également que le signal RACK prend la valeur 1 logique lorsque le processeur accepte une demande valide.

Compte tenu de cette convention, le fonctionnement du circuit d'acquittement des réponses est le suivant. Lorsqu'une réponse contenue dans le registre $RS_n$ est associée à un indicateur de réponse $B_r$ dont la valeur logique est égale à 1, cela signifie que cette réponse valide devrait être prise en compte par le processeur. Si tel est le cas, le signal RACK délivré par le processeur prend la valeur 1 logique et le circuit 6 délivre en sortie la valeur 0 logique. Dans le cas contraire, le signal RACK a la valeur 0 logique et la sortie du circuit 6 prend la valeur 1 logique signifiant ainsi que la demande n'a pas été acceptée par le processeur. Si par contre, l'indicateur $B_r$ contenu dans le registre $RS_n$ a la valeur 0 logique, la sortie 6 prend la valeur 0 logique également.

La figure 4 représente seulement les circuits de contrôle des réponses associés aux deux premiers modules $MM_n$ et $MM_{n-1}$ car les circuits associés aux autres modules sont identiques.

Nous allons maintenant considérer le circuit de contrôle des réponses $C_{n-1}$ associé au deuxième module $MM_{n-1}$. Ce circuit est constitué d'un circuit de sélection $2C_{n-1}$ et d'un circuit de commande $1C_{n-1}$. Le circuit de sélection $2C_{n-1}$ comprend deux multiplexeurs 7 et 8 à deux entrées. La première entrée du premier multiplexeur 7 est reliée à la sortie de la partie de l'étage $RS_{n-1}$ affectée à la réponse proprement dite. La seconde entrée du multiplexeur 7 est reliée à la sortie du module $MM_{n-1}$. La première entrée du second multiplexeur 8 est reliée à la sortie de la bascule de l'étage $RS_{n-1}$ affectée à l'indicateur de réponse $B_r$. Sa seconde entrée est maintenue à la valeur 1 logique.

Le circuit de commande $1C_{n-1}$ est relié en entrée à la sortie de la bascule de l'étage $RS_{n-1}$ contenant l'indicateur de réponse $B_r$. Le circuit $1C_{n-1}$ reçoit également le signal $R_{n-1}$ du module $MM_{n-1}$. Nous supposons que le signal $R_{n-1}$ prend la valeur 1 logique lorsqu'une demande est disponible dans le module $MM_{n-1}$. La sortie $S_{n-1}$ du circuit $1C_{n-1}$ est reliée à l'entrée de commande des deux multiplexeurs 7 et 8. Lorsque le signal $S_{n-1}$ à la valeur 1 logique, les multiplexeurs 7 et 8 mettent en communication leur entrée inférieure avec leur sortie. Le circuit de commande $1C_{n-1}$ est conçu de façon à ce que lorsque le signal $R_{n-1}$ a la valeur 1 logique et que l'indicateur $B_r$ a la valeur 0 logique, le signal $S_{n-1}$ prend la valeur 0 logique autorisant ainsi le transfert de la réponse présente dans l'interface de sortie du module $MM_{n-1}$ dans l'étage aval $RS_{n-2}$. Simultanément, l'indicateur $B_r$ fourni au registre aval prend la valeur 1 logique.

Si l'indicateur de réponse $B_r$ contenu dans le registre $RS_{n-1}$ a la valeur 1 logique, signifiant ainsi que la réponse est valide, le circuit de commande $1C_{n-1}$ délivre un signal $SM_{n-1}$ au module $MM_{n-1}$ pour informer ce module que la réponse ne peut pas être introduite dans le registre à décalage de réponse. De plus, le signal $S_{n-1}$ prend la valeur 0 logique et la demande contenue dans l'étage $RS_{n-1}$ est intégralement transférée dans le registre aval $RS_{n-2}$. Il en résulte que l'indicateur de réponse introduit dans le registre aval conserve la valeur 1 logique. Bien entendu, si aucune réponse n'est disponible dans le module $MM_{n-1}$, le signal $R_{n-1}$ prenant alors la valeur 0 logique, le signal $S_{n-1}$ prend la valeur 0 logique autorisant ainsi le transfert sans modification de la demande contenue dans l'étage $RS_{n-1}$ vers l'étage $RS_{n-2}$.

Le circuit de contrôle des réponses $C_n$ associé au premier module $MM_n$ est identique mais la première entrée de second multiplexeur est reliée à la sortie de la porte logique 6 du circuit d'acquittement des réponses 2.

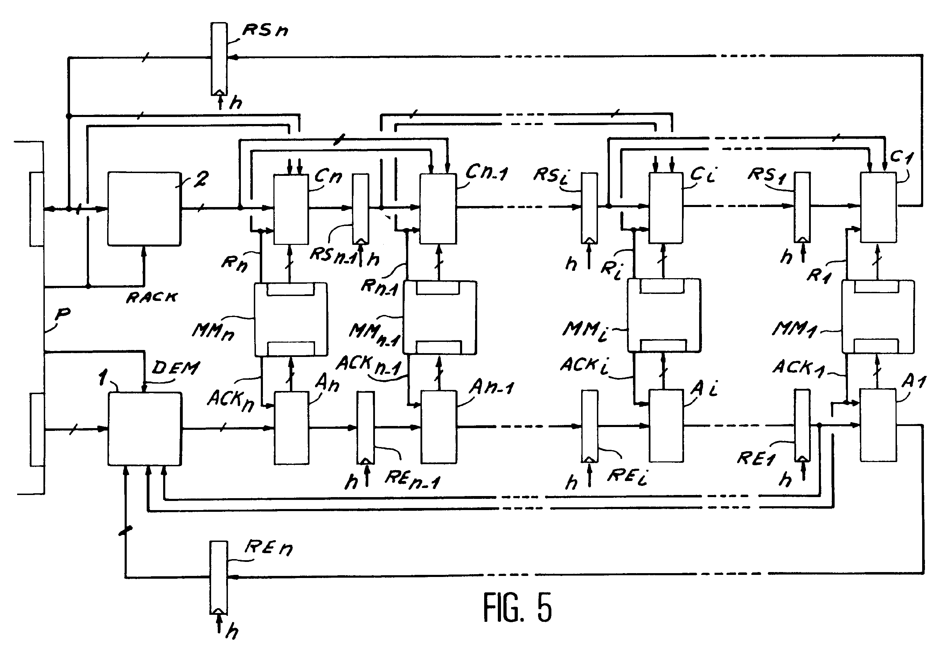

La figure 5 représente une autre variante de réalisation de la mémoire selon l'invention. Sur cette figure, on retrouve avec les mêmes références les éléments déjà représentés sur la figure 2. Cependant selon cette variante, les circuits de contrôle des réponses $C_1,...,C_i,...,C_n$ sont reliés aux sorties de l'étage situé en amont du module précédent. Ces circuits $C_i$ reçoivent également le signal $R_{i+1}$ issu du module amont $MM_{i+1}$.

Selon cette variante, les circuits de contrôle des réponses $C_i$ sont conçus de façon à déterminer avec un temps de cycle d'avance les conditions pour autoriser le transfert d'une réponse du module $MM_i$ associé vers l'étage aval du registre à décalage de sortie.

Si nous considérons le deuxième circuit de contrôle des réponses $C_{n-1}$ associé au deuxième module $MM_{n-1}$, ce circuit autorisera le transfert d'une réponse disponible dans le module associé $MM_{n-1}$ lorsque aucune réponse valide n'est présente en amont du module $MM_n$ et qu'aucune réponse n'est disponible dans ce module.

Selon cette variante de réalisation, nous disposons d'un mécanisme d'anticipation permettant de compenser les retards éventuels introduits par le circuit de contrôle des réponses de l'étage précédent.

Pour des raisons analogues, un mécanisme d'anticipation est également prévu dans le registre à décalage d'entrée. Selon cette autre variante, le circuit de contrôle des demandes 1 est relié à la sortie

de l'étage RE$_1$ et reçoit le signal ACK$_1$ engendré par le module MM$_1$. Le circuit de contrôle des demandes 1 est alors conçu de façon à ce qu'une demande issue du processeur P soit autorisée à être introduite dans le registre à décalage d'entrée lorsque l'une demande contenue dans l'étage RE$_1$ n'est pas valide ou lorsque cette demande est valide alors que le signal ACK$_1$ indique que cette demande sera acceptée par le module MM$_1$ car celle-ci est destinée à ce module et ce module est disponible.

La réalisation selon ces variantes du circuit d'acquittement des réponses 2, des circuits de contrôle des réponses C$_i$, du circuit de contrôle des demandes 1 et des circuits d'acquittement A$_i$ ne nécessite pas d'explications complémentaires car elles sont tout à fait à la portée de l'homme du métier compte-tenu des explications déjà données en référence aux figures 3 et 4, où sont représentées en pointillés les modifications à apporter aux liaisons.

## Revendications

1. Mémoire à plusieurs modules (MM$_i$) destinée à recevoir des demandes d'au moins un processeur (P), lesdites demandes ayant la forme de signaux de commandes, d'adressages et éventuellement de données, chaque module comportant des moyens pour décoder lesdites demandes apparaissant sur son entrée et des moyens pour fournir des signaux de réponse auxdites demandes, ladite mémoire étant caractérisée en ce que lesdites demandes sont transmises à l'entrée de chacun desdits modules (MM$_i$) par l'intermédiaire d'un registre à décalage d'entrée (RE$_1$...RE$_i$...RE$_{n-1}$), en ce que les réponses issues dudit module (MM$_i$) sont transmises à l'entrée dudit processeur (P) par l'intermédiaire d'un registre à décalage de sortie (RS$_1$...RS$_i$...RS$_{n-1}$), lesdits registres à décalage d'entrée et de sortie fonctionnant en synchronisme, en ce que le nombre d'étages dudit registre à décalage d'entrée qu'une demande traverse pour arriver à un desdits modules est différent pour chacun des modules associés et en ce que le nombre total d'étages appartenant aux registres à décalage d'entrée et de sortie associés à l'un desdits modules (MM$_i$) est constant et indépendant du module considéré.

2. Mémoire selon la revendication 1, caractérisée en ce qu'elle comporte un seul registre à décalage d'entrée et un seul registre à décalage de sortie communs à tous les modules, la sortie dudit processeur (P) étant reliée à l'entrée du premier étage (RE$_n$,1) dudit registre à décalage d'entrée, l'entrée audit processeur (P) étant reliée à la sortie du dernier étage (RS$_1$) dudit registre à décalage de sortie et en ce que la sortie de chaque étage (RE$_i$) de registre à décalage d'entrée est reliée à l'entrée d'un desdits modules (MM$_i$), la sortie dudit module (MM$_i$) étant

reliée à la sortie de l'étage (RS$_i$) de même rang du registre à décalage de sortie.

3. Mémoire selon la revendication 2, caractérisée en ce que la sortie dudit processeur (P) est directement reliée à l'entrée d'un module (MM$_n$) dont la sortie est reliée à l'entrée du premier étage (RS$_n$ 1) du registre à décalage de sortie.

4. Mémoire selon l'une des revendications 2 ou 3, caractérisée en ce que chaque module (MM$_i$) est associé à un circuit d'acquittement des demandes (A$_i$) pour associer à chaque demande un indicateur de demande (B) véhiculé par ledit registre à décalage d'entrée, ledit circuit d'acquittement des demandes (A$_i$) formant ledit indicateur de demandes (B) à une première valeur déterminée lorsqu'un signal d'acquittement (ACK$_i$ ) délivré par ledit module (MM$_i$) indique que ledit module (MM$_i$) accepte la demande présente à son entrée et en ce que ledit registre à décalage d'entrée comporte un étage supplémentaire (RE$_n$) placé en aval du dernier étage (RE$_1$) dudit registre à décalage, la sortie dudit étage supplémentaire (RE$_n$) étant reliée à un circuit de contrôle des demandes (1) associé audit processeur, ledit circuit de contrôle des demandes (1) comportant un dispositif de sélection des demandes (1B) autorisant le transfert à l'entrée dudit registre à décalage d'entrée soit d'une nouvelle demande, si la valeur dudit indicateur (B) contenue dans ledit étage supplémentaire (RE$_n$) est égale à ladite première valeur déterminée, soit de la demande contenue dans ledit étage supplémentaire (RE$_n$) dans le cas contraire, l'indicateur de demande (B) associé à toute nouvelles demande prenant une seconde valeur déterminée.

5. Mémoire selon la revendication 4, caractérisée en ce que ledit circuit de contrôle des demandes (1) reçoit ledit signal d'acquittement (ACK$_1$) du dernier module (MM$_1$) associé au dernier étage (RE$_1$) du registre à décalage d'entrée et en ce que ledit circuit de contrôle des demandes (1) commande ledit dispositif de sélection des demandes (1B) pour autoriser le transfert d'une nouvelle demande à l'entrée dudit registre à décalage d'entrée lorsque la valeur de l'indicateur de demande (B) contenue dans ledit dernier étage (RE$_1$) est égale à ladite première valeur déterminée ou lorsque, ledit indicateur ayant ladite seconde valeur déterminée, la demande contenue dans ledit dernier étage adresse le dernier module (Mm$_1$) et que ledit dernier module est disponible.

6. Mémoire selon l'une des revendications 2 à 5, caractérisée en ce que ledit registre à décalage de sortie comporte un étage supplémentaire (RS$_n$) placé en aval du dernier étage (RS$_1$) et en amont du premier étage (RS$_{n-1}$) dudit registre à décalage de sortie, en ce que la sortie dudit étage supplémentaire (RS$_n$) est reliée à l'entrée dudit processeur (P) et à l'entrée d'un circuit d'acquittement des réponses (2) associé audit processeur (P), ledit circuit d'acquittement des réponses (2) comprenant des moyens pour associer à chaque réponse transférée au premier étage (RS$_{n-1}$) dudit registre à décalage de sortie un indicateur de réponse (B$_r$) véhiculé par ledit registre à décalage de sortie, ledit indicateur de réponse (B$_r$) prenant une première valeur déterminée si ladite réponse est acceptée par le processeur (P), et en ce que chaque module (MM$_i$) est associé à un circuit de contrôle des réponses (C$_i$) comprenant un dispositif de sélection des réponses (2C$_i$) autorisant le transfert sur l'étage (RS$_{i-1}$) placé en aval dudit module (MM$_i$)

– soit d'une réponse disponible à la sortie dudit module (MM$_i$) si la valeur dudit indicateur de réponse (B$_r$) contenue dans l'étage (RS$_i$) situé en amont dudit module (MM$_i$) est égale à ladite première valeur déterminée,

– soit de la réponse contenue dans ledit étage amont (RS$_i$) dans le cas contraire,

et en ce que ledit circuit de contrôle des réponses (C$_i$) comprend des moyens (1C$_i$, 2C$_i$) pour forcer ledit indicateur de réponse (B$_r$) à une seconde valeur déterminée si une réponse issue dudit module (MM$_i$) est transférée sur ledit étage aval (RS$_{i-1}$).

7. Mémoire selon la revendication 6, caractérisée en ce que ledit circuit de contrôle des réponses (C$_i$) d'un module (MM$_i$) est relié à la sortie de l'étage (RS$_{i+1}$) placé en amont du module précédant (MM$_{i+1}$) et reçoit dudit module précédent un signal (R$_{i+1}$) indiquant que ledit module précédant (MM$_{i+1}$) a une réponse disponible et en ce que ledit circuit de contrôle des réponses (C$_i$) commande ledit dispositif de sélection des réponses (2C$_i$) pour autoriser le transfert d'une nouvelle réponse disponible dans ledit module (MM$_i$) à l'entrée de l'étage (RS$_{i-1}$) situé en aval dudit module (MM$_i$) lorsque la valeur de l'indicateur de réponse (B$_r$) contenue dans ledit étage amont (RS$_{i+1}$) est égale à ladite première valeur déterminée et lorsqu'aucune réponse n'est disponible dans le module précédent (MM$_{i+1}$).

8. Mémoire selon l'une des revendications précédentes, caractérisée en ce que les demandes contiennent en parallèle un code de fonction servant à définir l'opération à effectuer dans la mémoire, une information d'adresse, des données dans le cas d'une écriture et une étiquette d'origine dans le cas d'une lecture et en ce que les réponses contiennent en parallèle un compte rendu d'erreurs, une étiquette de destination correspondant à l'étiquette d'origine pour la demande considérée et des données dans le cas d'une lecture.

9. Mémoire selon la revendication 8, caractérisée en ce que ledit processeur (P) étant constitué par une pluralité de processeurs élémentaires, ladite étiquette d'origine est représentative de l'identité du processeur élémentaire qui envoie la demande.

**Patentansprüche**

1. Speicher mit mehreren Modulen (MM$_i$), der dazu vorgesehen ist, von wenigstens einem Prozessor (P) Anforderungen zu empfangen, wobei die Anforderungen die Form von Befehls-, Adressierungs- und möglicherweise Datensignalen besitzen, wobei jeder Modul Mittel zum Dekodieren der an seinem Eingang anliegenden Anforderungen und Mittel zum Liefern von Antwortsignalen auf die Anforderungen aufweist, wobei der Speicher dadurch gekennzeichnet ist, daß die Anforderungen über ein Eingangsschieberegister (RE$_1$...RE$_i$...RE$_{n-1}$) an den Eingang eines jeden der Module (MM$_i$) übertragen werden, daß die vom Modul (MM$_i$) ausgegebenen Antworten über ein Ausgangsschieberegister (RS$_1$...RS$_i$...ES$_{n-1}$) an den Eingang des Prozessors (P) übertragen werden, wobei die Eingangs- und Ausgangsschieberegister synchron arbeiten, daß die Anzahl der Stufen des Eingangsschieberegisters, die eine Anforderung durchläuft, um an einem der Module anzukommen, für jeden der zugeordneten Module verschieden ist, und daß die Gesamtanzahl der den Eingangs- und Ausgangsschieberegistern zugehörigen Stufen, die einem der Module (MM$_i$) zugeordnet sind, konstant und unabhängig vom betrachteten Modul ist.

2. Speicher gemäß Anspruch 1, dadurch gekennzeichnet, daß er ein einziges Eingangsschieberegister und ein einziges Ausgangsschieberegister aufweist, die sämtlichen Modulen gemeinsam sind, wobei der Ausgang des Prozessors (P) mit dem Eingang der ersten Stufe (RE$_{n-1}$) des Eingangsschieberegisters verbunden ist und wobei der Eingang des Prozessors (P) mit dem Ausgang der letzten Stufe (RS$_1$) des Ausgangsschieberegisters verbunden ist, und daß der Ausgang einer jeden Stufe (RE$_i$) des Eingangsschieberegisters mit dem Eingang eines der Module (MM$_i$) verbunden ist, wobei der Ausgang des Moduls (MM$_i$) mit dem Ausgang der Stufe (RS$_i$) gleichen Ranges des Ausgangsschieberegisters verbunden ist.

3. Speicher gemäß Anspruch 2, dadurch gekennzeichnet, daß der Ausgang des Prozessors (P) direkt mit dem Eingang eines Moduls (MM$_n$) verbunden ist, dessen Ausgang mit dem Eingang der ersten Stufe (RS$_{n-1}$) des Ausgangsschieberegisters verbunden ist.

4. Speicher gemäß einem der Ansprüche 2 oder 3, dadurch gekennzeichnet, daß jeder Modul (MM$_i$) mit einer Schaltung für die Quittierung der Anforderungen (A$_i$) verbunden ist, um jeder Anforderung einen vom Eingangsschieberegister mitgeführten Anforderungsmerker (B) zuzuweisen, wobei die Schaltung für die Quittierung der Anforderungen (A$_i$) den Anforderungsmerker (B) auf einen ersten bestimmten Wert zwingt, wenn ein vom Modul (MM$_i$) ausgegebenes Quittierungssignal (ACK$_i$) angibt, daß der Modul (MM$_i$) die an seinem Eingang vorliegende Anforderung akzeptiert, und daß das Eingangsschie-

beregister eine zusätzliche Stufe ($RE_n$) aufweist, die sich hinter des letzten Stufe ($RE_1$) des Schieberegisters befindet, wobei der Ausgang der zusätzlichen Stufe ($RE_n$) mit einer mit dem Prozessor verbundenen Steuerschaltung (1) für die Anforderungen verbunden ist, wobei die Steuerschaltung (1) für die Anforderungen eine Anforderungs-Auswahleinrichtung (1B) aufweist, die zuläßt, daß entweder an den Eingang des Eingansschieberegisters eine neue Anforderung übertragen wird, wenn der Wert des in der zuzätzlichen Stufe ($RE_n$) enthaltenen Merkers (B) gleich dem ersten bestimmten Wert ist, oder daß die in der zusätzlichen Stufe ($RE_n$) enthaltene Anforderung übertragen wird, wenn das Gegenteil der Fall ist, wobei der Anforderungsmerker (B), der jeder neuen Anforderung zugewiesen wird, einen zweiten bestimmten Wert annimmt.

5. Speicher gemäß Anspruch 4, dadurch gekennzeichnet, daß die Anforderungs-Steuerschaltung (1) das Quittierungssignal ($ACK_1$) des der letzten Stufe ($RE_1$) des Eingangsschieberegisters zugeordneten letzten Moduls ($MM_1$) empfängt und daß die Anforderungs-Steuerschaltung (1) die Anforderungs-Auswahleinrichtung (1B) steuert, um die Übertragung einer neuen Anforderung an den Eingang des Eingangsschieberegisters zuzulassen, wenn der Wert des Anforderungsmerkers (B), der in der letzten Stufe ($RE_1$) enthalten ist, gleich dem ersten bestimmten Wert ist oder wenn der Merker den zweiten bestimmten Wert besitzt und die in der letzten Stufe enthaltene Anforderung den letzten Modul ($MM_1$) adressiert und dieser letzte Modul verfügbar ist.

6. Speicher gemäß einem der Ansprüche 2 bis 5, dadurch gekennzeichnet, daß das Ausgangsschieberegister eine zusätliche Stufe ($RS_n$) aufweist, die hinter der letzten Stufe ($RS_1$) und von der ersten Stufe ($RS_{n-1}$) des Ausgangsschieberegisters angeordnet ist, daß der Ausgang der zuzätzlichen Stufe ($RS_n$) mit dem Eingang des Prozessors (P) und mit dem Eingang der dem Prozessor (P) zugeordneten Schaltung (2) für die Quittierung der Antwort verbunden ist, wobei die Antwort-Quittierungsschaltung (2) Mittel aufweist, um jeder an die erste Stufe ($RS_{n-1}$) des Ausgangsschieberegisters übertragenen Antwort einen Antwortmerker ($B_r$) zuzuweisen, der vom Ausgangsschieberegister mitgeführt wird, wobei der Antwortmerker ($B_r$) einen ersten bestimmten Wert annimmt, wenn die Antwort vom Prozessor (P) akzeptiert wird, und daß jeder Modul ($MM_i$) einer Antwort-Steuerschaltung ($C_i$) zugeordnet ist, die eine Antwort-Auswahleinrichtung ($2C_i$) aufweist, die zuläßt, daß zu der hinter dem Modul ($MM_i$) angeordneten Stufe ($RS_{i-1}$)

– entweder eine am Ausgang des Moduls ($MM_i$) verfügbare Antwort übertragen wird, wenn der Wert des in der vor dem Modul ($MM_i$) befindlichen Stufe ($RS_i$) enthaltenen Antwortmerkers ($B_r$) gleich dem ersten bestimmten Wert ist,

– oder die in der Stufe ($RS_i$) vor dem Modul ($MM_i$) enthaltene Antwort übertragen wird, wenn das Gegenteil der Fall ist, und daß die Antwort-Steuerschaltung ($C_i$) Mittel aufweist ($1C_i$, $2C_i$), um den Antwortmerker ($B_r$) auf einen zweiten bestimmten Wert zu zwingen, wenn eine vom Modul ($MMi$) ausgegebene Antwort zu der Stufe ($RS_{i-1}$) hinter dem Modul ($MM_i$) übertragen wird.

7. Speicher gemäß Anspruch 6, dadurch gekennzeichnet, daß die Antwort-Steuerschaltung ($C_i$) eines Moduls ($MM_i$) mit dem Ausgang der vor dem vorhergehenden Modul ($MM_{i+1}$) angeordneten Stufe ($RS_{i+1}$) verbunden ist und vom vorhergehenden Modul ein Signal ($R_{i+1}$) empfängt, das angibt, daß der vorhergehende Modul ($MM_{i+1}$) eine verfügbare Antwort enthält, und daß die Antwort-Steuerschaltung ($C_i$) die Antwort-Auswahleinrichtung ($2C_i$) steuert, um die Übertragung einer im Modul ($MM_i$) verfügbaren neuen Antwort an den Eingang der hinter dem Modul ($MM_i$) befindlichen Stufe ($RS_{i-1}$) zuzulassen, wenn der Wert des Antwortmekers ($B_r$), der in der Stufe ($RS_{i+1}$) vor dem Modul ($M_i$) enthalten ist, gleich dem ersten bestimmten Wert ist und wenn im vorhergehenden Modul ($MM_{i+1}$) keine Antwort verfügbar ist.

8. Speicher gemäß einem der vorangehenden Ansprüche, dadurch gekennzeichnet, daß die Anforderungen parallel einen Funktionskode, der der Definition der im Speicher auszuführenden Operation dient, eine Adresseninformation, im Falle des Schreibens Daten und im Falle des Lesens eine Herkunftskennung enthalten und daß die Antworten parallel eine Fehlermeldung, eine der Herkunftskennung des betrachteten Anforderung entsprechende Zielkennung und im Falle des Lesens Daten enthalten.

9. Speicher gemäß Anspruch 8, dadurch gekennzeichnet, daß der Prozessor (P) von einer Mehrzahl von Elementprozessoren gebildet wird, wobei die Herkunftskennung die Identität des die Anforderung aussendenden Elementarprozessors angibt.

## Claims

1. A memory comprising a plurality of modules ($MM_i$) intended to receive request from at least one processor (P), said requests having the form of control, adress, and possibility data signals, each module including means for decoding said requests appearing at its input and means for providing response signals to said request, said memory being characterised in that said requests are transmitted to the input of each of said modules ($MM_i$) by the intermediary of an input shift register ($RE_1...RE_i...RE_{n-1}$), in that the responses issued from said module ($MM_i$) are transmitted to the input of said processor (P) by the intermediary of an output shift register ($RS_1...RS_i...RO_{n-1}$), said input and output shift registers operating in synchronisation, in that the number of stages of the input shift register that a request passes through to arrive at one of said modules is different for each of the associated modules and in that the total number of stages belonging to the input and output shift registers associated with one of said modules ($MM_i$) is constant and independent of the module in question.

2. A memory according to claim 1, characterised in that it comprises a single input shift register and a single output shift register common to all the modules, the output of said processor (P) being connected to the input of the first stage ($RE_{n-1}$) of said input shift register, the input of said processor (P) being connected to the output of the last stage ($RS_1$) of said output shift register and in that the output of each stage ($RE_i$) of the input shift register is connected to the input of one of said module ($MM_i$), the output of said module ($MM_i$) being connected to the output of the equivalent stage ($RS_i$) of the output shift register.

3. A memory according to claim 2, characterised in that the output of said processor (P) is directly connected to the input of a module ($MM_n$) the output of which is connected to the input of the first stage ($RS_{n-1}$) of the output shift register.

4. A memory according to one of claims 2 or 3, characterised in that each module ($MM_i$) is associated with a response acknowledgement circuit ($A_i$) for associating with each request, a request indicator (B) conveyed by said input shift register, said response acknowledgement circuit ($A_i$) setting said request indicator (B) to a first set value when an acknowledgement signal ($ACK_i$) delivered by said module ($MM_i$) indicates that said module ($MM_i$) accepts the request present at its input and in that said input shift register comprises an additional stage ($RE_n$) placed downstream of the last stage ($RE_1$) of said shift register, the output of said additional stage ($RE_n$) being connected to a response control circuit (1) associated with said processor, said request control circuit (1) comprising a request selection device (1B) authorising the transfer to the input of said input register either of a new request, if the value of said indicator (B) contained in said additional stage ($RE_n$) is equal to said first set value, or of the request contained in said additional stage ($RE_n$) in the opposite case, the request indicator (B) associated with any new request taking a second set value.

5. A memory according to Claim 4, characterised in that said request control circuit (1) receives said acknowledgement signal ($ACK_1$) from the last module ($MM_1$) associated with the last stage ($RE_1$) of the input shift register, and in that said request control circuit (1) controls said request selection device (1B) to authorize the transfer of a new request to the input of said input shift register when the value of the request indicator (B) contained in said last stage ($RE_1$) is equal to said first set value or when, said indicator having said second set value, the request contained in said last stage addresses the last module ($MM_1$) and that said last module is available.

6. A memory according to one of the Claims 2 to 5, characterised in that said output shift register includes an additional stage ($RS_n$) located downstream from the last stage ($RS_1$) and upstream from the first stage ($RS_{n-1}$) of said output shift register, in that the output of said additional stage ($RS_n$) is connected to the input of said processor (P) and to the input of a response acknowledgement circuit (2) associated with said processor (P), said response acknowledgement circuit (2) including means for associating with each response transferred to the first stage ($RS_{n-1}$) of said output shift register a response indicator ($B_r$) conveyed by said output shift register, said response indicator ($B_r$) taking a first set value if said response is accepted by the processor (P), and in that each module ($MM_i$) is associated with a response control circuit ($C_i$) including a response selection device ($2C_i$) authorizing the transfer to the stage ($RS_{i-1}$) located downstream from said module ($MM_i$)

– either of a response available at the output of said module ($MM_i$) if the value of said pressure response indicator ($B_r$) contained in the stage ($RS_i$) smituated upstream of said module ($MM_i$) is equal to said first set value,

– or of the response contained in said upstream stage ($RS_i$) in the opposite case,

and in that said response control circuit ($C_i$) including means ($1C_i$, $2C_i$) to set said response indicator ($B_r$) to a second set value if a response coming from said module ($MM_i$) is transferred to said downstream stage ($RS_{i-1}$).

7. A memory according to Claim 6, charactised in that said response control circuit ($C_i$) of a module ($MM_i$) is connected to the output of the stage ($RS_{i+1}$) located upstream from the preceding module ($MM_{i+i}$) and received from said preceding module a signal ($R_{i+1}$) indicating that said preceding module ($MM_{i+1}$) has a response available and that said response control circuit ($C_i$) commands said response selection device ($2C_i$) to authorize the transfer of a new response available in said module ($MM_i$) to the input of the stage ($RS_{i-1}$) situated downstream from said module ($MM_i$) when the value of the response indicator ($B_r$) contained in said upstream stage ($RS_{i+1}$) is equal to said first set value and when no response is available in the preceding module ($MM_{i+1}$).

8. A memory according to one of the preceding claims, characterised in that the requests contain in parallel a function code serving to define the operation to be performed in the memory, an address information, data in the case of a write and a tag of origin in case of a read, and in that the responses contain in parallel an error report, a destination tag corresponding to the tag of origin for the request considered and data in the case of a read.

9. A memory according to Claim 8, characterised in that said processor (P) comprising a plurality of basic processors, said tag of origin is representative of the identity of the basic processor which sent the request.

FIG.1

FIG. 2

EP 0 344 052 B1

FIG. 3

FIG. 4

EP 0 344 052 B1

FIG. 5